# EUROPEAN PATENT SPECIFICATION

(11) **EP 1 343 222 B1**
(45) Date of publication and mention of the grant of the patent: **15.08.2007**
(21) Application number: 03394022.2
(22) Date of filing: 03.03.2003
(51) Int. Cl.: H01Q 1/12, F16L 3/237, F16L 3/223, H02G 3/36

(54) **A cable clamp**
Kabelklemme
Serre-câble

(30) Priority: 05.03.2002 IE 20020166
(43) Date of publication of application: 10.09.2003
(73) Proprietor: Spider Clamp Limited, Dublin 15 (IE)
(72) Inventor: Howe, James, Ballybrack, County Dublin (IE); Duffy, Joseph, Ballybrittas, County Laois (IE); McEvoy, Brendan, Portlaoise, County Laois (IE); O'Connor, Paul, Clonshaugh, Dublin 17 (IE)
(74) Representative: Weldon, Michael James

(56) References cited:
- US-A- 5 794 897
- PATENT ABSTRACTS OF JAPAN vol. 2002, no. 06, 4 June 2002 (2002-06-04) -& JP 2002 061774 A (TSURUMI MFG CO LTD), 28 February 2002 (2002-02-28)
- PATENT ABSTRACTS OF JAPAN vol. 1999, no. 01, 29 January 1999 (1999-01-29) -& JP 10 284858 A (OKI ELECTRIC IND CO LTD), 23 October 1998 (1998-10-23)

## Description

### Introduction

The invention relates to clamping of cables.

One of the primary situations where cable clamping is required is on a mast used for a mobile network and/or radio broadcasting. Increasingly, single masts are being used by a number of operators, giving rise to a requirement for training larger numbers of cables to antennae. It is therefore often difficult for technicians to identify appropriate cables to carry out maintenance and upgrade work. Also, the cables often occupy an excessive amount of space.

JP 10284858 describes a cable fixing structure having two mating parts with grooves for through holes for cables of different sizes.

US 5794897 describes a hanger for attaching a length of a transmission line. The hanger includes two gripping elements that have posts and openings to facilitate aligning of them in respect to each other. The posts and openings are arranged so that the posts in one element fit into the openings of the other elements to help align the two elements when they are placed around a transmission line. Once aligned, the two elements are brought toward each other until they snap together to form a clamping structure which loosely grips s the transmission line.

The invention is directed towards providing a clamp to address the above problems.

### Summary of the Invention

According to the invention, there is provided a cable clamp as set out in claim 1

In another embodiment, an outer groove of each lateral portion extends at least partially through laterally-directed fingers at the extremity of the lateral portion.

In a further embodiment, each clamp part comprises inter-engaging formations.

In one embodiment, the inter-engaging formations comprise a plug and a socket.

In another embodiment, each clamp part comprises at least two plugs and at least two sockets.

In a further embodiment, the clamp parts are identical.

In another embodiment, the material comprises mineral-impregnated polypropylene.

In one embodiment, the invention further comprises an insert for insertion between opposed grooves to grin a cable having a smaller diameter than the grooves.

A clamp assembly is provided comprising a clamp as defined above and a clamping bolt for extending through the through holes.>

In another aspect, the invention provides a clamp assembly comprising a plurality of clamps as defined above, the bolt being of sufficient length to retain and press all of the clamps.

### Detailed Description of the Invention

The invention will be more clearly understood from the following description of some embodiments thereof, given by way of example only with reference to the accompanying drawings in which:-
Figs. 1 to 3 are front, side, and plan views respectively of a clamp of the invention in use;
Fig. 4 is a perspective view from above of a clamp; and
Figs. 5, 6, 7, and 8 are top plan, underneath plan, front, and side views respectively of a clamp half.

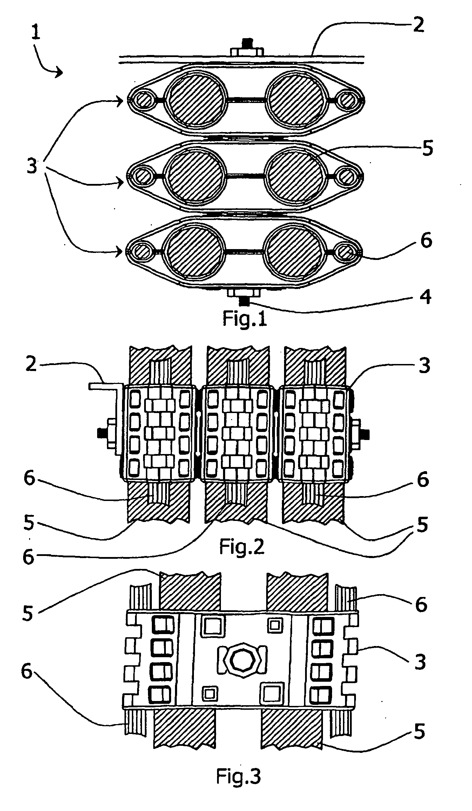

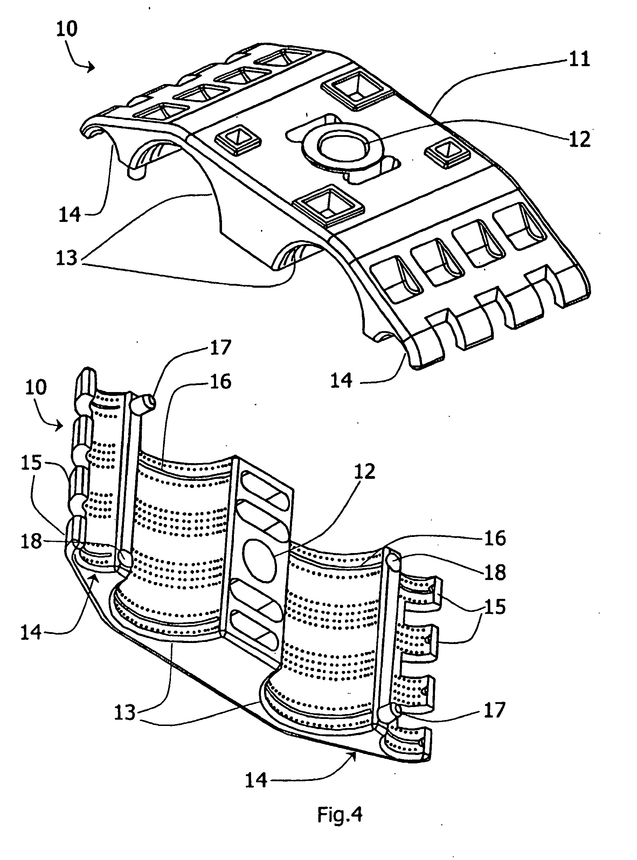

Referring to Figs. 1 to 3 a cable clamping assembly 1 comprises a tower bracing 2 supporting three clamps 3 using a bolt 4 extending through the bracing 2 and all three clamps 3. Each clamp 3 comprises two halves 10, shown in detail in Figs. 4 to 8 inclusive . A pair of clamp halves 10 between them clamp four cables, namely two 25 mm cables 5 and two 10 mm cables 6. Thus, the assembly 1 supports in a neat bundled arrangement six large cables 5 and also six small cables 6.

Each clamp half 10 is of integrally moulded polypropylene material, with a 20% by weight mineral additive for high heat stabilisation. The following table sets out important characteristics.

| Property | Value | Unit | Test Method |
|---|---|---|---|
| Density | 1050 | kg/m³ | ISO 1183 |
| Stress at Yield (50mm/min) | 36 | MPa | ISO R527 |
| Strain at Yield (50mm/min) | 10 | % | ISO R527 |

It is therefore very durable for withstanding the forces applied by cables in windy conditions at elevated locations on masts. Also, as shown most clearly in Fig. 7 the cross-sectional configuration provides sufficient bulk to transfer pressure from the clamping bolt 4 through the body 11 and on to the cables 5 and 6. This is achieved with minimum material and a streamlined and compact configuration.

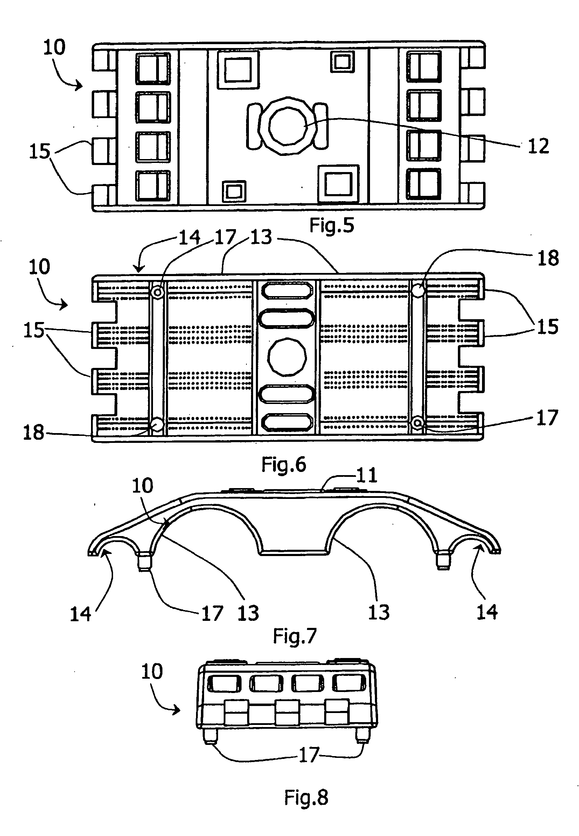

Referring particularly to Figs. 4 to 8, the clamp halves of a clamp 3 are identical to each other. This is very convenient for organisation of inventory for installation and maintenance personnel. Each clamp half 10 comprises a central body portion 11 through which an aperture 12 extends for receiving the bolt 4. Lateral portions extend out on both sides, shaped with an inner large groove 13 and an outer small groove 14 on each side. All grooves are of semi-circular shape in cross-section. As shown most clearly in Figs. 5 and 6 the clamp half 10 terminates in fingers 15 at each side.

The grooves 13 and 14 comprise transverse ridges 16 at intervals along their lengths. These are very effective at gripping the cables to prevent slippage in the axial direction. This complements the radially-directed clamping force transmitted from the bolt 4, through the body 11 and through the lateral material of the grooves 13 and 14 with a leaf-spring effect.

Each clamp half 10 comprises two plugs 17 and two corresponding sockets 18 for inter-engagement of two halves 10.

In use, a single clamp assembly is provided by inserting a bolt through a desired number of clamps 3 according to the length of the bolt 4 and/or the number of cables. In the example of Figs. 1 to 3 twelve cables are supported in one assembly, six 25 mm cables and six 10 mm cables. The assembly may also include a pair of halves making up a sleeve as an insert for the grooves 13 so that one or more additional thin cable can be accommodated in a clamp 3 instead of a wider cable. Thus, a single clamp 3 may hold three or four 10 mm cables for example.

It will be appreciated that the invention allows optimum use of cables of different sizes grouped according to owner or service. Also, the clamping is very strong without applying sufficient forces to possibly damage the cable insulation. Indeed, the clamp is effectively "fool proof' as the configuration does not allow excessive forces to be applied even with over-tightening of the bolt 4.

The invention is not limited to the embodiments described but may be varied in construction and detail within the scope of claim 1, for example the two clamp parts are not necessarily identical.

## Claims

1. A cable clamp comprising:-
at least two mating clamp parts for inter-engagement, the clamp parts having grooves for forming through holes for gripping cables when the parts are engaged,
wherein,
each clamp part comprises a central body and a lateral portion extending laterally on each side,
the grooves are arranged on the lateral portion,
the clamp comprises a clamping bolt, and each clamp part central body comprises a through hole extending perpendicularly to the grooves to receive the clamping bolt extending through both clamp parts to press them together,
the clamp parts are of integral moulded plastics material and are configured so that a radially directed clamping force is transmitted from the clamping bolt, through the central body and through the lateral portions with a leaf spring effect,
**characterized in that**,
each lateral portion comprises two grooves of different sizes, the larger groove being closer to the central body, and
the grooves are symmetrically arranged about the central body and are progressively smaller in the lateral direction from the central body.

2. A cable clamp as claimed in claim 1, wherein an outer groove of each lateral portion extends at least partially through laterally-directed fingers (15) at the extremity of the lateral portion.

3. A cable clamp as claimed in claims 1 or 2, wherein each clamp part (10) comprises inter-engaging formations.

4. A cable clamp as claimed in claim 3, wherein the inter-engaging formations comprise a plug (17) and a socket (18).

5. A cable clamp as claimed in claim 4, wherein each clamp part (10) comprises at least two plugs (17) and at least two sockets (18).

6. A cable clamp as claimed in any preceding claim, wherein the clamp parts (10) are identical.

7. A cable clamp as claimed in any preceding claim, wherein the material comprises mineral-impregnated polypropylene.

8. A cable clamp as claimed in any preceding claim, further comprising an insert for insertion between opposed grooves to grip a cable having a smaller diameter than the grooves.

9. A cable clamp assembly comprising a plurality of clamps (3) of any preceding claim, the bolt (4) being of sufficient length to retain and press all of the clamps (3).

## Patentansprüche

1. Kabelklemme, umfassend:
mindestens zwei zusammenpassende Klemmenteile zum Ineinandergreifen, wobei die Klemmenteile Nuten zum Bilden von Durchgangslöchern zum Ergreifen von Kabeln aufweisen, wenn die Teile in Eingriff stehen, wobei
jeder Klemmenteil einen Mittelkörper und einen Seitenteil aufweist, der sich seitlich auf jeder Seite erstreckt,
die Nuten an dem Seitenteil angeordnet sind,
die Klemme eine Klemmschraube aufweist, und jeder Klemmenteil-Mittelkörper ein Durchgangsloch aufweist, das sich senkrecht zu den Nuten zum Aufnehmen der Klemmschraube erstreckt, welche sich durch beide Klemmenteile erstreckt, um sie zusammenzupressen,
die Klemmenteile aus integriert geformtem Kunststoffmaterial bestehen und so konfiguriert sind, dass eine radial gerichtete Einspannkraft von der Klemmschraube durch den Mittekörper und durch die Seitenteile mit einer Blattfederwirkung übertragen wird, **dadurch gekennzeichnet, dass**
jeder Seitenteil zwei Nuten unterschiedlicher Größen aufweist, wobei die größere Nut sich näher zu dem Mittelkörper befindet, und
die Nuten symmetrisch um den Mittelkörper herum angeordnet sind und zunehmend kleiner in der Seitenrichtung von dem Mittelkörper sind.

2. Kabelklemme nach Anspruch 1, bei der eine äußere Nut jedes Seitenteils sich zumindest teilweise durch zur Seite gerichtete Finger (15) an der Extremität des Seitenteils erstreckt.

3. Kabelklemme nach den Ansprüchen 1 oder 2, bei der jeder Klemmenteil (10) ineinander greifende Ausbildungen aufweist.

4. Kabelklemme nach Anspruch 3, bei der die ineinander greifenden Ausbildungen einen Stecker (17) und eine Buchse (18) aufweisen.

5. Kabelklemme nach Anspruch 4, bei der jeder Klemmenteil (10) mindestens zwei Stecker (17) und mindestens zwei Buchsen (18) aufweist.

6. Kabelklemme nach einem vorhergehenden Anspruch, bei der die Klemmenteile (10) identisch sind.

7. Kabelklemme nach einem vorhergehenden Anspruch, bei der das Material mineralimprägniertes Polypropylen aufweist.

8. Kabelklemme nach einem vorhergehenden Anspruch, die weiter einen Einsatz zum Einsetzen zwischen gegenüberliegenden Nuten aufweist, um ein Kabel mit einem kleineren Durchmesser als die Nuten zu ergreifen.

9. Kabelklemmenbaugruppe, die eine Mehrzahl von Klemmen (3) eines jeglichen vorhergehenden Anspruchs aufweist, wobei die Schraube (4) eine ausreichende Länge zum Festhalten und Pressen aller der Klemmen (3) hat.

## Revendications

1. Un serre-cable comprenant :
au moins deux pièces de serrage conjuguées à engager l'une avec l'autre, les deux pièces de serrage étant munies de rainures pour former des trous de passage afin de serrer les câbles quand les pièces sont engagées, où chaque pièce de serrage comporte un corps central et une partie latérale s'étendant latéralement de chaque côté ;
les rainures sont disposées sur la partie latérale,
le serre-câble comprend un boulon de serrage, et chaque corps central de pièce de serrage comporte un trou de passage s'étendant perpendiculairement aux rainures pour recevoir le boulon de serrage s'étendant à travers les deux pièces de serrage pour les presser l'une contre l'autre,
les pièces de serrage sont en matière plastique moulée d'une pièce et sont configurées de manière à ce qu'une force de serrage dirigée radialement soit transmise depuis le boulon de serrage, à travers le corps central et à travers les parties latérales avec un effet de ressort à lame,
**caractérisé en ce que**,
chaque partie latérale comporte deux rainures de tailles différentes, la rainure la plus grande étant plus proche du corps central, et
les rainures sont disposées symétriquement autour du corps central et sont progressivement plus petites en direction latérale à partir du corps central.

2. Un serre-câble conforme à la revendication 1, où une rainure extérieure de chaque partie latérale s'étend au moins partiellement à travers des doigts dirigés latéralement (15) à l'extrémité de la partie latérale.

3. Un serre-câble conforme aux revendications 1 ou 2, où chaque pièce de serrage (10) comporte des formations s'engageant les unes avec les autres.

4. Un serre-câble conforme à la revendication 3, où les formations s'engageant les unes avec les autres comportent un raccord mâle (17) et un raccord femelle (18).

5. Un serre-câble conforme à la revendication 4, où chaque pièce de serrage (10) comporte au moins deux raccords mâles (17) et au moins deux raccords femelles (18).

6. Un serre-câble conforme à l'une quelconque des revendications précédentes, où les pièces de serrage (10) sont identiques.

7. Un serre-câble conforme à l'une quelconque des revendications précédentes, où le matériau comprend du polypropylène imprégné de minéral.

8. Un serre-câble conforme à l'une quelconque des revendications précédentes, comportant de plus un insert à insérer entre des rainures opposées pour serrer un câble de diamètre inférieur aux rainures.

9. Un assemblage de serre-câble comportant une pluralité de serre-câble (3) de l'une quelconque des revendications précédentes, le boulon (4) étant de longueur suffisante pour retenir et presser tous les serre-câble (3).
